(19) Europäisches Patentamt
European Patent Office
Office européen des brevets

(11) Publication number: 0 123 060 B1

(12) EUROPEAN PATENT SPECIFICATION

(45) Date of publication of patent specification: 04.11.87

(51) Int. Cl.[4]: C 01 B 33/18, B 01 J 20/10, B 01 J 21/08, B 01 J 29/04

(21) Application number: 84102066.2

(22) Date of filing: 28.02.84

(54) **Ultrapure crystalline silica polymorphs and process for the preparation thereof.**

(30) Priority: 28.02.83 US 470536

(43) Date of publication of application: 31.10.84 Bulletin 84/44

(45) Publication of the grant of the patent: 04.11.87 Bulletin 87/45

(84) Designated Contracting States: BE DE FR GB IT NL

(56) References cited:
EP-A-0 012 572
US-A-4 021 331
US-A-4 061 724
US-A-4 283 306
US-A-4 325 929

(73) Proprietor: E.I. DU PONT DE NEMOURS AND COMPANY
1007 Market Street
Wilmington Delaware 19898 (US)

(72) Inventor: Yang, Duck Joo
103 Harvey Road
Wallingford Pennsylvania 19086 (US)

(74) Representative: Abitz, Walter, Dr.-Ing. et al
Abitz, Morf, Gritschneder, Freiherr von
Wittgenstein Postfach 86 01 09
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 123 060 B1

**Description**

Background of the invention

Field of the invention

The present invention relates to several ultrapure crystalline silica polymorphs, i.e., those containing essentially only silicon and oxygen therein and to a process of producing silica polymorphs which employs a relatively pure organosilicon as a source of silica and a relatively pure template.

Description of the prior art

Crystalline aluminosilicates, commonly referred to as zeolites, are known as catalysts for reactions such as disproportionation and methylation of toluene. Such zeolites which are referred to by a "ZSM" and a number designation are discussed extensively in U.S. Pats. 4,127,616 issued on November 28, 1978, 4,259,306 issued on March 31, 1981 and 4,357,233 issued on November 2, 1982. Silicas which are structurally related to the zeolites are disclosed in U.S. Pat. Appln. 2,077,709 A published on December 23, 1981.

Crystalline silica compositions having a sodium oxide to silicon oxide ratio of about .3—7 which have high surface areas and are useful as sorbents are disclosed in U.S. Pat. 3,884,835 issued on May 20, 1975.

Crystalline metal organosilicates which are alleged to be substantially free of aluminum but which contain major amounts of sodium oxide and oxides of metals other than Group III-A are disclosed in U.S. Pat. 3,941,871 issued on March 2, 1976.

The effect of the amount of aluminum relative to silica is discussed in the articles "Chemical and Physical Properties of the ZSM-5 Substitutional Series", Olsen et al., Journal of Catalysts Vol. 61, pages 390—396 (1980) and "When is a Zeolite not a Zeolite?", L. V. C. Reeves, Nature, Vol. 296, page 491—492, (April 8, 1982). U.S. Pat. 3,894,103 issued on July 8, 1975 discusses the effect of the silica/alumina ratio on the catalytic activity of the crystalline aluminosilicate zeolite and implies that as the ratio of silica to alumina increases above about 800 the ability of the zeolite to convert methanol to aromatic compounds appears to decrease. An apparent contradiction of the foregoing is U.S. Pat. 4,283,306 issued on August 11, 1981 which discloses novel crystalline silicas having a relatively low aluminum content which are extremely effective catalysts for the methylation of toluene. The calcined (activated) form on the catalyst exhibits a density of 1.81—1.94 grams/cc.

Several crystalline silica polymorphs are reported in the literature. U.S. Pat. 4,061,724 issued on December 6, 1977 discloses the preparation of a silica composition by the hydrothermal reaction of water, amorphous silica and a quaternary ammonium compound at a pH of at least 10.1. Large crystals of a silica polymorph having a density of 1.70 which are prepared by a hydrothermal process in the presence of fluoride irons are disclosed in U.S. Pat. 4,073,865 issued on February 14, 1978. The utilization of high-shear mixing in the preparation of crystalline silica suitable for use in preparing aromatic alkylation or isomerization catalysts is disclosed in U.S. Pat. 4,344,927 issued on August 17, 1982. The inclusion of phosphate or sulfate ions in the reaction mixture to produce a silica polymorph is disclosed in British Patent Application 2,084,552A published on April 15, 1982. The extraction of aluminum contained in the framework of a crystalline zeolite molecular sieve by contacting the zeolite with an acetylacetone after the zeolite is rendered substantially cation deficient and at least partially dehydroxylated and the simultaneous substitution of other metals in the framework is disclosed in U.S. Pat. 3,640,681 issued on February 8, 1972. General discussions of silicas identified as silicalites are found in the articles, "Silicalite—A New Hydrophobic Crystalline Silica Molecular Sieve", E. M. Flannigen et al., Nature, Vol. 271, pages 512—516 (February 9, 1978), "Silicalite-2, a silica analogue of the aluminosilicate zeolite ZSM-11", D. M. Bibby et al., Nature, Vol. 280, pages 664—5 (August 23, 1979). The silicalite discussed in the former article is disclosed as having a density of approximately of 1.76 grams/cc. The silicalite discussed in the latter article is taught to have a density of 1.82 grams/cc, a refractive index of 1.41 and an aluminum level alleged to be less than 5 ppm.

A method for preparing an aluminosilicate zeolite having aluminum-free outer surface and a product produced thereby is disclosed in U.S. Pat. 4,088,605 issued on May 9, 1978 and U.S. Pat. 4,203,869 issued on May 20, 1980. The preparation of a crystalline microporous organosilicate is disclosed in U.S. Pat. 4,104,294 issued on August 1, 1978.

The use of a phosphorus modified silica polymorph for selectively producing paraxylene by toluene methylation is disclosed in U.S. Pat. 4,270,017 issued on May 26, 1981.

The use of organosilicon compounds as the silica source is described only in combination with compounds containing metals such as titanium (U.K. Pat. Appln. 2,071,071A published on September 18, 1981) aluminum (French Pat. 2,478,063 published on September 18, 1981), germanium (U.K. Pat. Appln. 2,023,562A published on January 3, 1980) and iron and chromium (European Pat. Appln. 0014059 published August 8, 1980).

A representative use of silicalite for selective sorption is described by Milestone et al. in the article "Concentration of Alcohols by Adsorption on Silicalite", J. Chem. Tech. Biotechnol., 1981, 31, 732—736.

The use of relatively pure, metal-free organosilicon compounds as a silica source and the silica polymorphs thus produced have not been disclosed or suggested.

## Summary of the invention

This invention relates to certain types of ultrapure silica polymorphs several of which have a pentasil type structure and to a process for producing these and several other types of ultrapure silica polymorphs. The polymorphs claimed herein consist of silicon and oxygen with other metals except the alkali metals being absent, i.e., metal-free. The aluminum content (as Al) for example, is less than about 55 ppm. The polymorphs which have a density of at least about 1.83 grams/cc exhibit no catalytic activity but are uniquely adapted to the introduction of catalytically active sites which are not a part of the framework of the silica. The polymorphs have an X-ray diffraction pattern substantially as set forth in the following Tables II or IV or VI or VIII. These and other pure polymorphs are prepared by employing metal-free, e.g., aluminum-free, organosilicon compounds having the formula

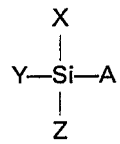

wherein A is a group selected from the class consisting of H, OH, $R_1$, $OR_2$, Cl, phenoxy, and

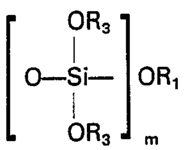

and

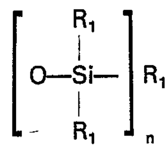

X, Y and Z are the same or different and are groups selected from the class consisting of $R_4$, $OR_5$, phenoxy and phenyl and wherein one of the groups is additionally hydroxyl; $R_{1-5}$ are the same or different and are selected from the class consisting of alkyl groups having 1—10 carbon atoms and cycloalkyl groups having 5—10 carbon atoms, m is an integer of 1—10 and n is an integer of 1—5 preferably 1—2.

An aqueous basic reaction medium having a pH in the range 9.5—13.8 and a temperature greater than 100°C and less than 300°C, preferably in the range 140—200°C, is employed along with a relatively pure template compound.

## Detailed description of the invention

The crystalline silicas of the present invention are ultrapure silica polymorphs consisting of only silica and oxygen. Except for the alkali metals which are readily removed from the present silica polymorphs, the polymorphs are essentially free of other metals. Metal such as aluminum which is present in significant amounts in inorganic sources of silica and is difficult to remove therefrom is present at a level of less than 55 ppm in the polymorphs of the present invention. Frequently aluminum is also present in organosilicon compounds in amounts sufficient to introduce enough metal into the polymorph to render it catalytically active. Other metals are not added to the present process and therefore are believed not to be present in significant amounts. However, if present, they can be removed from the organosilicon or template by methods apparent to those skilled in the art. The characteristics of the silicas vary depending upon the conditions employed in the preparation, the source of silica and the template compound. All the silicas of the present invention exhibit no surface acidity according to the tests hereinafter described and are catalytically inactive in hydrocarbon reactions where aluminum containing silicas are active.

The silica polymorphs prepared according to the process of the present invention readily sorb organics from an aqueous solution thereof.

The measurements of density, refractive index and surface area of the silica polymorphs as reported herein in each instance were taken after the polymorph had been calcined in air at about 550°C for at least four hours. X-ray diffraction measurements were taken before and after calcination as noted.

One form of the silica polymorph comprises linked tetrahedra of five-membered and six-membered rings which form channels of ten-membered rings of silicon-oxygen atoms. This microporous crystalline polymorph is believed to have straight and zigzag channels in the range of 0.5—0.65 nm (5.0—6.5 Å) in diameter. It has a density of about 1.85 grams/cc, a refractive index of about 1.38 and a surface area of 350—450 $m^2$/gram. This silica is hydrophobic, organophilic, has essentially no ion exchange properties and selectively sorbs organic molecules from aqueous ionic solutions. This is the type of silica polymorph which is prepared according to Example 1. In the as synthesized form the silica has the X-ray diffraction pattern set forth in Table I and after calcination as described above the pattern set forth in Table II. The X-ray diffraction measurements were obtained with $CuK_a$ radiation at 40 KeV 40 mA on a Phillips diffractometer having a scintillation counter and compensating slit containing 12.5 mm of irradiated sample 3 mils in thickness.

TABLE I

| d, nm (Å) | Relative intensity | d, nm (Å) | Relative intensity |
|---|---|---|---|
| 1.115 (11.15) | 23 | 0.436 (4.36) | 9 |
| 0.999 (9.99) | 15 | 0.426 (4.26) | 9 |
| 0.974 (9.74) | 6 | 0.408 (4.08) | 2 |
| 0.896 (8.96) | 1 | 0.400 (4.00) | 7 |
| 0.802 (8.02) | <1 | 0.384 (3.84) | 100 |
| 0.744 (7.44) | 7 | 0.375 (3.75) | 28 |
| 0.707 (7.07) | 3 | 0.372 (3.72) | 42 |
| 0.671 (6.71) | 3 | 0.365 (3.65) | 30 |
| 0.636 (6.36) | 8 | 0.359 (3.59) | 1 |
| 0.605 (6.05) | 7 | 0.348 (3.48) | 3 |
| 0.598 (5.98) | 6 | 0.344 (3.44) | 10 |
| 0.571 (5.71) | 6 | 0.338 (3.38) | 2 |
| 0.556 (5.56) | 7 | 0.333 (3.33) | 8 |
| 0.537 (5.37) | 1 | 0.331 (3.31) | 8 |
| 0.513 (5.13) | 2 | 0.324 (3.24) | 2 |
| 0.501 (5.01) | 5 | 0.318 (3.18) | 1 |
| 0.498 (4.98) | 5 | 0.314 (3.14) | 1 |
| 0.486 (4.86) | <1 | 0.305 (3.05) | 8 |
| 0.460 (4.60) | 7 | 0.298 (2.98) | 10 |
| 0.444 (4.44) | 2 | | |

TABLE II

| d, nm (Å) | Relative intensity | d, nm (Å) | Relative intensity |
|---|---|---|---|
| 1.119 (11.19) | 99 | 0.426 (4.26) | 14 |
| 1.005 (10.05) | 57 | 0.408 (4.08) | 2 |
| 0.979 (9.79) | 17 | 0.401 (4.01) | 5 |
| 0.901 (9.01) | 1 | 0.385 (3.85) | 100 |
| 0.807 (8.07) | <1 | 0.383 (3.83) | 62 |
| 0.745 (7.45) | 1 | 0.374 (3.74) | 36 |
| 0.707 (7.07) | <1 | 0.372 (3.72) | 47 |
| 0.672 (6.72) | 8 | 0.365 (3.65) | 26 |
| 0.637 (6.37) | 17 | 0.360 (3.60) | 2 |
| 0.600 (6.00) | 23 | 0.348 (3.48) | 5 |
| 0.571 (5.71) | 13 | 0.344 (3.44) | 9 |
| 0.558 (5.58) | 16 | 0.339 (3.39) | 3 |
| 0.537 (5.37) | 4 | 0.335 (3.35) | 8 |
| 0.513 (5.13) | 3 | 0.331 (3.31) | 10 |
| 0.502 (5.02) | 8 | 0.325 (3.25) | 3 |
| 0.500 (5.00) | 8 | 0.318 (3.18) | 2 |
| 0.488 (4.88) | <1 | 0.314 (3.14) | 2 |
| 0.462 (4.62) | 6 | 0.305 (3.05) | 8 |
| 0.445 (4.45) | 1 | 0.299 (2.99) | 13 |
| 0.436 (4.36) | 8 | | |

Another form of the silica polymorph produced according to the present invention and particularly according to Example 9, comprises five- and six-membered rings arranged in pentagonal dodecahedra cages and hexadecahedral cages. It has a density of about 1.87 grams/cc, a refractive index of about 1.44 and surface area of 3—10 $m^2$/gram. In the as synthesized form the silica has X-ray diffraction pattern as set forth in Table III and after calcination, the pattern set forth in Table IV.

TABLE III

| d, nm (Å) | Relative intensity | d, nm (Å) | Relative intensity |
|---|---|---|---|
| 1.111 (11.11) | 1 | 0.295 (2.95) | 7 |
| 0.683 (6.83) | 8 | 0.271 (2.71) | 3 |
| 0.582 (5.82) | 34 | 0.252 (2.52) | 9 |
| 0.557 (5.57) | 29 | 0.242 (2.42) | 2 |
| 0.483 (4.83) | 24 | 0.236 (2.36) | 12 |
| 0.444 (4.44) | 18 | 0.228 (2.28) | 23 |
| 0.395 (3.95) | 36 | 0.224 (2.24) | 5 |
| 0.372 (3.72) | 100 | 0.216 (2.16) | 4 |
| 0.342 (3.42) | 45 | 0.213 (2.13) | 2 |
| 0.326 (3.26) | 91 | 0.206 (2.06) | 1 |
| 0.322 (3.22) | 11 | 0.198 (1.98) | 4 |
| 0.306 (3.06) | 12 | 0.194 (1.94) | 7 |
| | | 0.190 (1.90) | 3 |
| | | 0.186 (1.86) | 14 |

TABLE IV

| d, nm (Å) | Relative intensity | d, nm (Å) | Relative intensity |
|---|---|---|---|
| 1.115 (11.15) | 5 | 0.295 (2.95) | 13 |
| 0.683 (6.83) | 31 | 0.291 (2.91) | 4 |
| 0.582 (5.82) | 91 | 0.271 (2.71) | 5 |
| 0.558 (5.58) | 59 | 0.259 (2.59) | 2 |
| 0.483 (4.83) | 36 | 0.251 (2.51) | 16 |
| 0.443 (4.43) | 28 | 0.242 (2.42) | 3 |
| 0.432 (4.32) | 3 | 0.236 (2.36) | 17 |
| 0.395 (3.95) | 36 | 0.228 (2.28) | 29 |
| 0.372 (3.72) | 98 | 0.223 (2.23) | 12 |
| 0.342 (3.42) | 43 | 0.216 (2.16) | 7 |
| 0.327 (3.27) | 100 | 0.212 (2.12) | 4 |
| 0.322 (3.22) | 15 | 0.206 (2.06) | 3 |
| 0.306 (3.06) | 18 | 0.202 (2.02) | 2 |
| | | 0.197 (1.97) | 5 |
| | | 0.194 (1.94) | 9 |
| | | 0.190 (1.90) | 6 |
| | | 0.186 (1.86) | 15 |

A third form of silica polymorph produced according to the present invention and particularly according to Example 7 comprises linked tetrahedra configuration believed to have elliptical channels of ten-membered rings of about 0.45—0.7 nm (4.5—7.0 Å) in diameter. It has a density of about 2.08 g/cc, a refractive index of about 1.40 and a surface area of 150—250 $m^2$/gram. This silica is hydrophobic and organophilic. The X-ray diffraction pattern of the uncalcined silica is set forth in Table V and the pattern of the calcined silica is shown in Table VI.

TABLE V

| d, nm (Å) | Relative intensity | d, nm (Å) | Relative intensity |
|---|---|---|---|
| 1.194 (11.94) | 7 | 0.310 (3.10) | 5 |
| 1.026 (10.26) | 4 | 0.285 (2.85) | 15 |
| 0.718 (7.18) | 1 | 0.273 (2.73) | 2 |
| 0.615 (6.15) | 1 | 0.263 (2.63) | 2 |
| 0.589 (5.89) | 4 | 0.248 (2.48) | 4 |
| 0.520 (5.20) | <1 | 0.238 (2.38) | 8 |
| 0.465 (4.65) | 3 | 0.234 (2.34) | 6 |
| 0.419 (4.19) | 86 | 0.223 (2.23) | <1 |
| 0.389 (3.89) | 100 | 0.210 (2.10) | 6 |
| 0.359 (3.59) | 15 | 0.206 (2.06) | 9 |
| 0.339 (3.39) | 6 | 0.202 (2.02) | 3 |

TABLE VI

| d, nm (Å) | Relative intensity | d, nm (Å) | Relative intensity |
|---|---|---|---|
| 1.186 (11.86) | 16 | 0.309 (3.09) | 6 |
| 1.030 (10.30) | 8 | 0.286 (2.86) | 19 |
| 0.719 (7.19) | 4 | 0.274 (2.74) | 8 |
| 0.614 (6.14) | 6 | 0.262 (2.62) | 6 |
| 0.587 (5.87) | 9 | 0.248 (2.48) | 10 |
| 0.529 (5.29) | 3 | 0.243 (2.43) | 12 |
| 0.494 (4.94) | 4 | 0.238 (2.38) | 14 |
| 0.420 (4.20) | 100 | 0.235 (2.35) | 12 |
| 0.389 (3.89) | 81 | 0.224 (2.24) | 6 |
| 0.361 (3.61) | 17 | 0.217 (2.17) | 7 |
| 0.347 (3.47) | 13 | 0.210 (2.10) | 12 |
| 0.337 (3.37) | 9 | 0.206 (2.06) | 12 |

A fourth form of silica polymorph produced according to the process of the present invention and particularly according to Example 12 comprises of linked tetrahedra of four-, five- and six-membered rings which form a system of straight, axially aligned channels of 0.5—0.65 nm (5.0—6.5 Å) in diameter with ten-membered rings of silicon-oxygen atoms intersecting similar perpendicular channels. This microporous crystalline silica polymorph after calcination at about 550°C in air for at least four hours, exhibits a density of about 1.83 grams/cc, a refractive index of about 1.47, and a surface area of 400—500 $m^2$/gram. The as synthesized form of the silica has the X-ray diffraction pattern set forth in Table VII and after calcination the pattern set forth in Table VIII.

TABLE VII

| d, nm (Å) | Relative intensity | d, nm (Å) | Relative intensity |
|---|---|---|---|
| 1.104 (11.04) | 17 | 0.401 (4.01) | 4 |
| 0.998 (9.98) | 13 | 0.384 (3.84) | 100 |
| 0.742 (7.42) | 2 | 0.372 (3.72) | 44 |
| 0.709 (7.09) | <1 | 0.365 (3.65) | 14 |
| 0.668 (6.68) | 2 | 0.349 (3.49) | 6 |
| 0.638 (6.38) | 1 | 0.339 (3.39) | 6 |
| 0.605 (6.05) | 4 | 0.334 (3.34) | 8 |
| 0.596 (5.96) | 5 | 0.326 (3.26) | 4 |
| 0.556 (5.56) | 4 | 0.319 (3.19) | 3 |
| 0.513 (5.13) | 2 | 0.305 (3.05) | 9 |
| 0.499 (4.99) | 3 | 0.299 (2.99) | 15 |
| 0.460 (4.60) | 5 | 0.287 (2.87) | 3 |
| 0.436 (4.36) | 10 | 0.279 (2.79) | 3 |
| 0.426 (4.26) | 3 | | |

TABLE VIII

| d, nm (Å) | Relative intensity | d, nm (Å) | Relative intensity |
|---|---|---|---|
| 1.098 (10.98) | 63 | 0.398 (3.98) | 4 |
| 0.988 (9.88) | 45 | 0.383 (3.83) | 100 |
| 0.740 (7.40) | <1 | 0.370 (3.70) | 51 |
| 0.665 (6.65) | 5 | 0.363 (3.63) | 14 |
| 0.635 (6.35) | 3 | 0.347 (3.47) | 7 |
| 0.594 (5.94) | 19 | 0.338 (3.38) | 6 |
| 0.553 (5.53) | 11 | 0.331 (3.31) | 11 |
| 0.511 (5.11) | 2 | 0.324 (3.24) | 4 |
| 0.497 (4.97) | 9 | 0.317 (3.17) | 3 |
| 0.459 (4.59) | 4 | 0.304 (3.04) | 11 |
| 0.444 (4.44) | 2 | 0.297 (2.97) | 19 |
| 0.433 (4.33) | 8 | 0.286 (2.86) | 3 |
| 0.423 (4.23) | 2 | 0.278 (2.78) | 3 |

In addition to the above-described characteristics, the silica polymorphs of the present invention exhibit an extremely low, i.e., practically no surface acidity relative to other types of silicas. This absence of acidity provides a catalyst base which is essentially inert in acid catalyzed reactions and, for this reason,

catalytically active sites can be introduced with great accuracy because the support does not contribute to the activity. The absence of acidity on the surface of the silica can be especially valuable in certain applications where the presence of acid would interfere with the compound being sorbed. This surface acidity is readily determined using Hammett indicators according to the following general procedure. Approximately 2 mg portions of the following indicators are added to separate 250 ml portions of dry toluene:anthraquinone (pKa −8.2), benzalacetophenone (Chalcone, pKa −5.6), dicinnamalacetone (pKa −3), 2-amino-5-azotoluene (pKa +2), 4-phenylazonaphthylamine (pKa +4). The indicated pKa at which indicators change color is approximate. About 300 mg sample is calcined in a furnace at 450° to 550°C for 3 hours in a stream of dry air. The sample is removed from the furnace and sealed in a container while still hot, i.e., not less than about 150°C. About 50 mg portions are transferred to dried vials under dry nitrogen atmosphere, for example, in a glove bag or in a dry box. Two to three milliliters of indicators solutions are added to each of the vials and any color change is recorded. Except in the case where there is some reaction of the indicator with the silica, all the indicators set forth above will indicate an absence of surface acidity in the silica polymorphs of the present invention. The exception can be disregarded since it will not be confirmed by the remaining indicators.

The silica polymorphs of the present invention are made by heating a reaction mixture comprising water, an organosilicon compound and alkylammonium ion containing compound and optionally a dispersing agent under hydrothermal conditions at a pH in the range of 9.5—13.8. The basicity can be controlled by several methods. An alkylammonium hydroxide can be used alone, or in combination with an alkylammonium halide or a diamine, e.g., hexamethylenediamine to provide basicity. Ammonium hydroxide and an alkylammonium halide is also an acceptable combination. Alkali metal hydroxides can be used to supply basicity but are not preferred because, unlike the bases previously described, the residual alkali metal requires an additional processing scheme for removal from the polymorph and can be a source of impurities.

The reaction times and the temperatures are not critical so long as sufficient time at elevated temperature is provided to permit the formation of the crystalline silicas. The reaction temperature can vary from 100—300°C but preferably, is maintained in the range of 140—200°C. The reaction time can be as long as practical but, preferably, does not exceed 50—100 hours. In an especially preferred embodiment a continuous reaction is employed with the result that the time can be reduced to less than about one hour. After reaction the product is separated from the liquid, e.g., by filtration then washed and dried according to known techniques prior to further processing.

Numerous compounds are suitable as templates for the formation of the silica polymorphs provided that the template, except for alkali metal, is metal-free. The preferred compounds contain alkylammonium cations which cations are defined by the formula

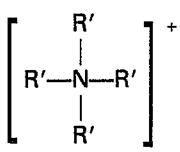

,

wherein the groups represented by R′ are the same or different and consisting of alkyl groups containing 1 to 6 carbon atoms. Preferably R′ is methyl, ethyl, n-propyl, n-butyl and mixtures thereof. Operable anions include hydroxide and halide, e.g., chloride. Illustrative compounds include tetramethylammonium hydroxide, tetraethylammonium hydroxide, tetrapropylammonium hydroxide, tetrabutylammonium hydroxide, and the salts corresponding to the aforesaid hydroxides, particularly the chloride, iodide and bromide salts, for example, tetrapropylammonium bromide. The quaternary cation can be supplied to the reaction mixture per se or can be generated in situ. Additional templates include compounds wherein the nitrogen atom is replaced by phosphorus in the above formula and diamines having the formula $NH_2(CH_2)_nNH_2$ wherein n=2—12 such as ethylenediamine and hexamethylenediamine. Additional template compounds should be apparent to those skilled in the art. For most systems any of the above described substituent groups on the alkylammonium cation will perform satisfactorily but it is preferred to employ alkylammonium cations having substituent groups of more than two carbon atoms in mixture with a tetraethylammonium cation. Tetramethylammonium hydroxide, tetrapropylammonium hydroxide, tetrabutylammonium hydroxide, and hexamethylenediamine are preferred template compounds.

Metal contamination of the silica product can occur if the template compound is not sufficiently pure. At least a part of any metal such as aluminum in the alkylammonium compound are assimulated into the silica polymorph and therefore must be removed before reaction. For example, aluminum in tetrapropylammonium hydroxide is readily removed as follows. Approximately 30 parts of 20% aqueous tetrapropylammonium hydroxide (TPNOH) containing 2 ppm of aluminum were adjusted to pH of 8.5 with pure aqueous HCl following which the solution was stirred and refluxed with 10 parts of amorphous silica at 95°C overnight. The mixture was then filtered. The filtrate containing the template compound had essentially no aluminum (0.1 ppm) therein. Other methods for removing metals from the template source should be apparent to those skilled in the art. Diamine can be readily purified by distillation.

Alkylammonium salts can be purified as described by S. Lindenbaum and G. E. Boyd in references 8—16 in the article "Osmotic and Activity Coefficients for the Symmetrical Tetraalkylammonium Halides in Aqueous Solution at 25°C", J. Phys. Chem. 68, 911 (1964).

The organosilicons which are the source of silica in the present invention have the formula

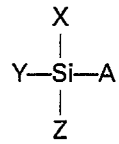

wherein A is a group selected from the class consisting of H, OH, $R_1$, $OR_2$, Cl, phenoxy, and

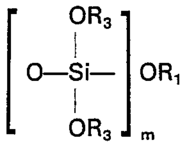

and

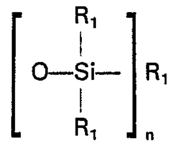

X, Y and Z are the same or different and are groups selected from the class consisting of $R_4$, $OR_5$, phenoxy and phenyl and wherein one of the groups is additionally hydroxyl; $R_{1-5}$ are the same or different and are selected from the class consisting of alkyl groups having 1—10 carbon atoms and cycloalkyl groups having 5—10 carbon atoms, m is an integer of 1—10 and n is an integer of 1—5 preferably 1—2.

Illustrative of operable organosilicon compounds include tetramethyl orthosilicate, tetraethyl orthosilicate, tetra-n-propyl orthosilicate, tetra-n-butyl orthosilicate, a mixture composed of ethylpolysilicates, tetra 2-ethylhexyl orthosilicate, triethoxysilane, triphenylhydroxysilane, triethoxychlorosilane, triethoxyphenylsilane, tetraethylsilane, p - t - butylphenethyldimethylchlorosilane, diphenyldihydroxysilane, hexamethyldisiloxane, triethoxymethylsilane, tetraisobutyl orthosilicate, triamylhydroxysilane, triisoamylhydroxysilane, tetraphenoxysilane, tripentoxyhydroxysilane, tetracosapentyloxyhendecasiloxane and tetradecabutylhexasiloxane. Generally the higher molecular weight compounds should be hydrolizable under reaction conditions. Tetramethyl orthosilicate, tetraethyl orthosilicate, ethylpolysilicates, hexamethyldisiloxane, tetrapropyl orthosilicate tetra 2-ethylhexyl orthosilicate, triethyloxysilane, triethoxychlorosilane, tetraethylsilane are preferred silicon sources.

Aluminum which is present in catalytically significant amounts in silicas prepared from inorganic silicates, for example, fumed silica and colloidal silica is extremely difficult to completely remove therefrom. By contrast, aluminum is readily removed from the present organosilicon compounds by simple unit operations, e.g., by distillation. For example, 100 parts of tetraethyl orthosilicate containing 5 parts of aluminum isopropylate (aluminum concentration 5532 ppm as Al) were distilled at a pot temperature of 166°C and a head temperature of 168°C utilizing internal reflux to provide a distillate containing practically no aluminum (0.1 ppm). Other methods for removing metals from the silicon source should be apparent to those skilled in the art.

Dispersing agents can be employed in the present process so long as they do not participate in the reaction to a degree that the desirable characteristics of the silica polymorphs are reduced. Alcohols having from 1—6 carbon atoms are quite suitable as dispersing agents. Examples of such alcohols include methanol, ethanol, n-propanol, n-butanol, n-pentanol, n-hexanol and their isomers.

Dispersing agents are preferably employed when the silicon source is particularly non-polar. Other operable dispersing agents should be apparent to those skilled in the art.

The relative ratios of reactants can vary over rather wide limits but usually the relative amounts of the silicon source compound (S), the template compound (T), water ($H_2O$), and, optionally, alcohol (A) expressed as mole ranges are $S/H_2O$ of 0.005—5 and preferably 0.01—0.1, T/S of 0.01—10 and preferably 0.02—1 and $A/H_2O$ of 0—5 and preferably 0.02—1. Mixtures of silicon source compounds, templates and alcohols are within the purview of the present invention.

The following Examples which are summarized in Table IX are presented to illustrate but not to restrict the present invention. Parts and percentages are by weight unless otherwise noted. The following abbreviations are used in the tabulated Examples:

TEOS=Tetraethyl orthosilicate.
TMOS=Tetramethyl orthosilicate.
TPOS=Tetrapropyl orthosilicate.
TBOS=Tetrabutyl orthosilicate.
ES=Ethylsilicate (mixture of ethylpolysilicates).
TECS=Triethoxychlorosilane.
TENOH=Tetraethylammonium hydroxide—40% aqueous.
NA=Not analyzed.
TPNBR=Tetrapropylammonium bromide.
TPNOH=Tetrapropylammonium hydroxide
(40) 40% aqueous
(20) 20% aqueous.
HMD=Hexamethylenediamine (85% aqueous).
TMNOH=Tetramethylammonium hydroxide.
TBNBR=Tetrabutylammonium bromide.
TBNOH=Tetrabutylammonium hydroxide (40% aqueous).
TMNOH=Tetramethylammonium hydroxide.
TMA=Trimethylamine.

TABLE IX

| Example No. | Silica source Type | Silica source Amount (g) | Template Type | Template Amount (g) | Alcohol Type | Alcohol Amount (g) | Water (Grams) | Time (hrs) | Al (ppm) | X-Ray pattern (Table No.) As produced | X-Ray pattern (Table No.) Calcined |
|---|---|---|---|---|---|---|---|---|---|---|---|
| 1 | TEOS | 235 | TENOH<br>TPNBR | 167<br>47 | Ethanol | 129 | 600 | 114 | 2 | I[9] | II[9] |
| 2[1] | " | " | TENOH<br>TPNBR | 167<br>47 | " | 113 | 635 | 200 | 6.8 | I | NA |
| 3 | " | 50 | TPNOH<br>(20) | 56 | " | 30 | 80 | 105 | 3 | " | " |
| 4[2] | " | 235 | TPNBR<br>TENOH | 47<br>167 | " | 113 | 635 | 100 | 14 | " | " |
| 5[3] | " | " | TPNBR | 200 | — | 0 | 500 | 93 | 46 | " | " |
| 6 | " | 250 | HMD | 280 | Ethanol | 150 | 400 | 122 | 25 | V | " |
| 7 | " | " | " | " | " | " | " | 123 | 37 | " | VI |
| 8 | " | " | " | " | " | " | 1200 | 124 | 6 | " | NA |
| 9[4] | TMOS | 152 | TMNOH[5] | 330 | — | 0 | 792 | 27 | 16 | III | IV |
| 10 | " | 172 | TMNOH[5]<br>TMA[6] | 278<br>60 | — | 0 | 585 | 114 | NA | " | NA |
| 11 | TPOS | 250 | TMNOH[7] | 200 | Ethanol | 120 | 500 | 103 | 1 | " | " |
| 12 | TBOS | 253 | TBNBR<br>TBNOH | 40<br>197 | N-Butanol | 145 | 372 | 71 | 49 | VII | VIII |
| 13 | ES | 60 | TPNOH<br>(40) | 60 | — | 0 | 82 | 98 | 39 | I | NA |
| 14 | TEOS<br>ES | 60<br>60 | TPNOH<br>(20) | 60 | — | 0 | 80 | 105 | <0.5 | " | " |
| 15[8] | TECS | 100 | TPNBR<br>TENOH | 45<br>167 | — | 0 | 400 | 94 | 23 | " | " |
| 16 | TBOS | 75 | TBNOH | 48 | — | 0 | 45 | 98 | 7 | VII | " |

Footnotes

(1) Approximately 180 grams of a 28% aqueous solution of ammonium hydroxide added to the reaction mixture along with 1 gram of an as synthesized polymorph resembling the product of Example 1.

(2) Approximately 0.25 gram of an as synthesized polymorph resembling the product of Example 1 was added to the reaction mixture.

(3) Approximately 2393 grams of a 28% aqueous solution of ammonium hydroxide added to the reaction mixture.

(4) Reaction conducted at 180°C.

(5) As a 20% solution in methanol.

(6) As a 24% aqueous solution.

(7) As a 40% aqueous solution.

(8) Approximately 525 grams of a 28% aqueous solution of ammonium hydroxide added to the reaction mixture.

(9) Orthorhombic form in the sample.

Examples 1—16

A solution was prepared by combining the indicated reactants with vigorous stirring at room temperature for approximately 30 minutes. The resultant solution was charged to a pressure reactor indicated. The reactor was sealed and the temperature of its contents was raised slowly to 160°C with stirring (100 rpm) and held at 160°C with stirring for the time indicated under autogeneous pressure. Hastelloy C or other essentially inert metals are the preferred materials of construction for the reactor. In Examples 3, 13, 14 and 16 the materials were charged to a bottle constructed of Teflon® and the bottle was placed in an autoclave. The contents of the bottles were not agitated during the reaction period. The solid crystalline product was recovered by filtration and washed three times, each time with a volume of water equal to the volume of solids following which the washed material was dried at 95°C in a nitrogen atmosphere. The X-ray diffraction pattern was measured before and after calcination in air at about 550°C for about four hours. Analysis of the calcined product indicated the presence of less than the indicated amount of aluminum. Approximately 1.8 parts of the calcined activated silica polymorph of Example 1, prepared as above were placed in a one inch diameter quartz reactor inserted in a split tube furnace and tested for its activity in toluene disproportionation, toluene methylation, xylene isomerization and conversion of methanol to hydrocarbons under conditions which if employed with an active catalyst would indicate significant reaction. The same amount of the polymorphs of Examples 6, 9 and 12 was tested as previously described for toluene methylation. In no case did any of the silica polymorphs show any catalytic activity.

In addition to the silicon source compounds set forth in Table IX, triethoxysilane, tetra-2-ethylhexyl orthosilicate, triethoxyphenylsilane, diphenyldihydroxysilane, hexamethyldisiloxane, triethoxymethylsilane, p-t-butylphenethyldimethylchlorosilane, tetraethylsilane, tetraphenoxysilane and hydroxytriphenylsilane produced crystalline silica polymorphs when used in the present process.

Solutions as set forth in Table X were prepared and combined with indicated amounts of silica polymorph of Example 1. The mixture was maintained at room temperature for approximately 16 hours with occasional shaking. The supernatant liquid was analyzed by gas chromatography to determine the amount of organic sorbed by the silica polymorph. The results are given in Table X.

TABLE X

| Aqueous solution | Weight ratio of solution to silica | % Organic sorbed |
|---|---|---|
| 1% $CH_3OH$ | 4/1<br>2/1 | 32%<br>52% |
| 1% $C_2H_5OH$ | 2/1 | 93% |
| 1% n-pronanol | 2/1 | 97% |
| 1% n-butanol | 2/1 | ~100% |
| 1% ethylene glycol (EG) | 2/1 | 21% |
| 1% 1,3-propanediol (PG) | 2/1 | 73% |
| 1% 1,4-butanediol | 2/1 | 98% |
| 0.5% ethylene glycol and<br>0.5% 1,3-propanediol | 2/1 | 15% (EG)<br>80% (PG) |
| 0.1% aniline | 2/1 | ~100% |
| 0.1% phenol | 2/1 | ~100% |
| Toluene (saturated) | 2/1 | ~100% |
| Perchloroethylene (saturated) | 2/1 | ~100% |

Two standard solutions having low concentrations of $NH_3$ and ethanol ($H_2O/NH_3/EtOH \simeq 98/1/1$) were prepared, the first by using aqueous ammonia solution (28%) and the second by using ammonium chloride. A calcined polymorph similar to that of Example 1 (0.2 gm) was added to 1.4 grams of each standard solution. Each mixture was kept at room temperature without stirring overnight. Ethanol and ammonia in each supernatant liquid were analyzed. Essentially no ammonia was sorbed while 53% and 64% of the available ethanol respectively was sorbed. This is further evidence of the absence of surface acidity and cation exchange properties.

Solutions as set forth in Table XI were prepared and combined with the indicated amount of the silica polymorph of Example 12. The mixture was maintained at room temperature for about 2—3 days following which the supernatant liquid was analyzed as before. The results are reported in Table XI.

TABLE XI

| Aqueous solution | Weight ratio of solution to silica | % Organic sorbed |
|---|---|---|
| 1% $CH_3OH$ | 15/1 | 6 |
| 1% $C_2H_5OH$ | 15/1 | 46 |
| 1% n-propanol | 15/1 | 87 |
| 1% n-butanol | 15/1 | 93 |
| 1% ethylene glycol | 15/1 | 4 |
| 1% 1,3-propanediol | 15/1 | 18 |
| 1% 1,4-butanediol | 15/1 | 66 |

**Claims**

1. A crystalline silica polymorph consisting of silicon and oxygen, said polymorph except for alkali

metals being metal-free and having an aluminum content of less than about 55 ppm, no surface acidity, a density of at least about 1.83 and an X-ray diffraction pattern substantially as set forth in Tables II or IV or VI or VIII

TABLE II

| d, nm (Å) | Relative intensity | d, nm (Å) | Relative intensity |
|---|---|---|---|
| 1.119 (11.19) | 99 | 0.426 (4.26) | 14 |
| 1.005 (10.05) | 57 | 0.408 (4.08) | 2 |
| 0.979 (9.79) | 17 | 0.401 (4.01) | 5 |
| 0.901 (9.01) | 1 | 0.385 (3.85) | 100 |
| 0.807 (8.07) | <1 | 0.383 (3.83) | 62 |
| 0.745 (7.45) | 1 | 0.374 (3.74) | 36 |
| 0.707 (7.07) | <1 | 0.372 (3.72) | 47 |
| 0.672 (6.72) | 8 | 0.365 (3.65) | 26 |
| 0.637 (6.37) | 17 | 0.360 (3.60) | 2 |
| 0.600 (6.00) | 23 | 0.348 (3.48) | 5 |
| 0.571 (5.71) | 13 | 0.344 (3.44) | 9 |
| 0.558 (5.58) | 16 | 0.339 (3.39) | 3 |
| 0.537 (5.37) | 4 | 0.335 (3.35) | 8 |
| 0.513 (5.13) | 3 | 0.331 (3.31) | 10 |
| 0.502 (5.02) | 8 | 0.325 (3.25) | 3 |
| 0.500 (5.00) | 8 | 0.318 (3.18) | 2 |
| 0.488 (4.88) | <1 | 0.314 (3.14) | 2 |
| 0.462 (4.62) | 6 | 0.305 (3.05) | 8 |
| 0.445 (4.45) | 1 | 0.299 (2.99) | 13 |
| 0.436 (4.36) | 8 | | |

TABLE IV

| d, nm (Å) | Relative intensity | d, nm (Å) | Relative intensity |
|---|---|---|---|
| 1.115 (11.15) | 5 | 0.295 (2.95) | 13 |
| 0.683 (6.83) | 31 | 0.291 (2.91) | 4 |
| 0.582 (5.82) | 91 | 0.271 (2.71) | 5 |
| 0.558 (5.58) | 59 | 0.259 (2.59) | 2 |
| 0.483 (4.83) | 36 | 0.251 (2.51) | 16 |
| 0.443 (4.43) | 28 | 0.242 (2.42) | 3 |
| 0.432 (4.32) | 3 | 0.236 (2.36) | 17 |
| 0.395 (3.95) | 36 | 0.228 (2.28) | 29 |
| 0.372 (3.72) | 98 | 0.223 (2.23) | 12 |
| 0.342 (3.42) | 43 | 0.216 (2.16) | 7 |
| 0.327 (3.27) | 100 | 0.212 (2.12) | 4 |
| 0.322 (3.22) | 15 | 0.206 (2.06) | 3 |
| 0.306 (3.06) | 18 | 0.202 (2.02) | 2 |
| | | 0.197 (1.97) | 5 |
| | | 0.194 (1.94) | 9 |
| | | 0.190 (1.90) | 6 |
| | | 0.186 (1.86) | 15 |

TABLE VI

| d, nm (Å) | Relative intensity | d, nm (Å) | Relative intensity |
|---|---|---|---|
| 1.186 (11.86) | 16 | 0.309 (3.09) | 6 |
| 1.030 (10.30) | 8 | 0.286 (2.86) | 19 |
| 0.719 (7.19) | 4 | 0.274 (2.74) | 8 |
| 0.614 (6.14) | 6 | 0.262 (2.62) | 6 |
| 0.587 (5.87) | 9 | 0.248 (2.48) | 10 |
| 0.529 (5.29) | 3 | 0.243 (2.43) | 12 |
| 0.494 (4.94) | 4 | 0.238 (2.38) | 14 |
| 0.420 (4.20) | 100 | 0.235 (2.35) | 12 |
| 0.389 (3.89) | 81 | 0.224 (2.24) | 6 |
| 0.361 (3.61) | 17 | 0.217 (2.17) | 7 |
| 0.347 (3.47) | 13 | 0.210 (2.10) | 12 |
| 0.337 (3.37) | 9 | 0.206 (2.06) | 12 |

TABLE VIII

| d, nm (Å) | Relative intensity | d, nm (Å) | Relative intensity |
|---|---|---|---|
| 1.098 (10.98) | 63 | 0.398 (3.98) | 4 |
| 0.988 (9.88) | 45 | 0.383 (3.83) | 100 |
| 0.740 (7.40) | <1 | 0.370 (3.70) | 51 |
| 0.665 (6.65) | 5 | 0.363 (3.63) | 14 |
| 0.635 (6.35) | 3 | 0.347 (3.47) | 7 |
| 0.594 (5.94) | 19 | 0.338 (3.38) | 6 |
| 0.553 (5.53) | 11 | 0.331 (3.31) | 11 |
| 0.511 (5.11) | 2 | 0.324 (3.24) | 4 |
| 0.497 (4.97) | 9 | 0.317 (3.17) | 3 |
| 0.459 (4.59) | 4 | 0.304 (3.04) | 11 |
| 0.444 (4.44) | 2 | 0.297 (2.97) | 19 |
| 0.433 (4.33) | 8 | 0.286 (2.86) | 3 |
| 0.423 (4.23) | 2 | 0.278 (2.78) | 3 |

2. A silica polymorph of claim 1 having a pentasil structure.

3. A catalyst base comprising the silica set forth in claim 1.

4. A process for preparing crystalline silica polymorphs according to claims 1 to 2 comprising heating at a temperature in the range 100—300°C an organosilicon compound which except for the alkali metals is essentially metal-free and has the formula

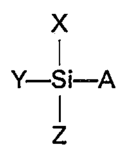

wherein A is a group selected from the class consisting of H, OH, $R_1$, $OR_2$, Cl, phenoxy, and

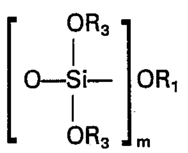

and

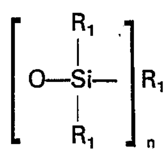

X, Y and Z are the same or different and are groups selected from the class consisting of $R_4$, $OR_5$, phenoxy and phenyl and wherein one of the groups is additionally hydroxyl; and $R_{1-5}$ are the same or different and are selected from the class consisting of alkyl groups having 1—10 carbon atoms and cycloalkyl groups having 5—10 carbon atoms, m is an integer of 1—10 and n is an integer of 1—5 preferably 1—2 in the presence of a template compound in an aqueous basic reaction medium the pH of which is maintained in the range of 9.5—13.8.

5. The process of claim 4 wherein the organosilicon is tetramethyl orthosilicate.

6. The process of claim 5 wherein a dispersing agent is present in the reaction medium.

7. The process of claim 6 wherein the template is a compound selected from the group consisting of tetramethylammonium hydroxide, tetrapropylammonium hydroxide, tetrabutylammonium hydroxide and hexamethylenediamine.

8. The process of claim 4 wherein the organosilicon is ethylpolysilicate.

**Patentansprüche**

1. Polymorphes kristallines Siliciumdioxid bestehend aus Silicium und Sauerstoff, welches abgesehen von Alkalimetallen frei von Metall ist und einen Aluminiumgehalt von weniger als etwa 55 ppm, keine Oberflächenacidität, eine Dichte von wenigstens etwa 1,83 und ein Röntgenbeugungsdiagramm besitzt, wie es im wesentlichen in den Tabellen II oder IV oder VI oder VIII dargestellt ist

TABELLE II

| d, nm (Å) | Relative Intensität | d, nm (Å) | Relative Intensität |
|---|---|---|---|
| 1.119 (11.19) | 99 | 0.426 (4.26) | 14 |
| 1.005 (10.05) | 57 | 0.408 (4.08) | 2 |
| 0.979 (9.79) | 17 | 0.401 (4.01) | 5 |
| 0.901 (9.01) | 1 | 0.385 (3.85) | 100 |
| 0.807 (8.07) | <1 | 0.383 (3.83) | 62 |
| 0.745 (7.45) | 1 | 0.374 (3.74) | 36 |
| 0.707 (7.07) | <1 | 0.372 (3.72) | 47 |
| 0.672 (6.72) | 8 | 0.365 (3.65) | 26 |
| 0.637 (6.37) | 17 | 0.360 (3.60) | 2 |
| 0.600 (6.00) | 23 | 0.348 (3.48) | 5 |
| 0.571 (5.71) | 13 | 0.344 (3.44) | 9 |
| 0.558 (5.58) | 16 | 0.339 (3.39) | 3 |
| 0.537 (5.37) | 4 | 0.335 (3.35) | 8 |
| 0.513 (5.13) | 3 | 0.331 (3.31) | 10 |
| 0.502 (5.02) | 8 | 0.325 (3.25) | 3 |
| 0.500 (5.00) | 8 | 0.318 (3.18) | 2 |
| 0.488 (4.88) | <1 | 0.314 (3.14) | 2 |
| 0.462 (4.62) | 6 | 0.305 (3.05) | 8 |
| 0.445 (4.45) | 1 | 0.299 (2.99) | 13 |
| 0.436 (4.36) | 8 | | |

TABELLE IV

| d, nm (Å) | Relative Intensität | d, nm (Å) | Relative Intensität |
|---|---|---|---|
| 1.115 (11.15) | 5 | 0.295 (2.95) | 13 |
| 0.683 (6.83) | 31 | 0.291 (2.91) | 4 |
| 0.582 (5.82) | 91 | 0.271 (2.71) | 5 |
| 0.558 (5.58) | 59 | 0.259 (2.59) | 2 |
| 0.483 (4.83) | 36 | 0.251 (2.51) | 16 |
| 0.443 (4.43) | 28 | 0.242 (2.42) | 3 |
| 0.432 (4.32) | 3 | 0.236 (2.36) | 17 |
| 0.395 (3.95) | 36 | 0.228 (2.28) | 29 |
| 0.372 (3.72) | 98 | 0.223 (2.23) | 12 |
| 0.342 (3.42) | 43 | 0.216 (2.16) | 7 |
| 0.327 (3.27) | 100 | 0.212 (2.12) | 4 |
| 0.322 (3.22) | 15 | 0.206 (2.06) | 3 |
| 0.306 (3.06) | 18 | 0.202 (2.02) | 2 |
| | | 0.197 (1.97) | 5 |
| | | 0.194 (1.94) | 9 |
| | | 0.190 (1.90) | 6 |
| | | 0.186 (1.86) | 15 |

TABELLE VI

| d, nm (Å) | Relative Intensität | d, nm (Å) | Relative Intensität |
|---|---|---|---|
| 1.186 (11.86) | 16 | 0.309 (3.09) | 6 |
| 1.030 (10.30) | 8 | 0.286 (2.86) | 19 |
| 0.719 (7.19) | 4 | 0.274 (2.74) | 8 |
| 0.614 (6.14) | 6 | 0.262 (2.62) | 6 |
| 0.587 (5.87) | 9 | 0.248 (2.48) | 10 |
| 0.529 (5.29) | 3 | 0.243 (2.43) | 12 |
| 0.494 (4.94) | 4 | 0.238 (2.38) | 14 |
| 0.420 (4.20) | 100 | 0.235 (2.35) | 12 |
| 0.389 (3.89) | 81 | 0.224 (2.24) | 6 |
| 0.361 (3.61) | 17 | 0.217 (2.17) | 7 |
| 0.347 (3.47) | 13 | 0.210 (2.10) | 12 |
| 0.337 (3.37) | 9 | 0.206 (2.06) | 12 |

TABELLE VIII

| d, nm (Å) | Relative Intensität | d, nm (Å) | Relative Intensität |
|---|---|---|---|
| 1.098 (10.98) | 63 | 0.398 (3.98) | 4 |
| 0.988 (9.88) | 45 | 0.383 (3.83) | 100 |
| 0.740 (7.40) | <1 | 0.370 (3.70) | 51 |
| 0.665 (6.65) | 5 | 0.363 (3.63) | 14 |
| 0.635 (6.35) | 3 | 0.347 (3.47) | 7 |
| 0.594 (5.94) | 19 | 0.338 (3.38) | 6 |
| 0.553 (5.53) | 11 | 0.331 (3.31) | 11 |
| 0.511 (5.11) | 2 | 0.324 (3.24) | 4 |
| 0.497 (4.97) | 9 | 0.317 (3.17) | 3 |
| 0.459 (4.59) | 4 | 0.304 (3.04) | 11 |
| 0.444 (4.44) | 2 | 0.297 (2.97) | 19 |
| 0.433 (4.33) | 8 | 0.286 (2.86) | 3 |
| 0.423 (4.23) | 2 | 0.278 (2.78) | 3 |

2. Polymorphes Siliciumdioxid nach Anspruch 1 mit Pentasilstruktur.

3. Katalysatorgrundstoff umfassend das in Patentanspruch 1 angegebene Siliciumdioxid.

4. Verfahren zur Herstellung von polymorphem kristallinem Siliciumdioxid nach den Ansprüchen 1 bis 2, umfassend das Erhitzen einer Organosiliciumverbindung bei einer Temperatur im Bereich von 100—300°C, welche abgesehen von Alkalimetallen im wesentlichen frei von Metall ist und die Formel

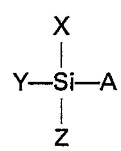

besitzt, in welcher A ein Rest ist ausgewählt aus der Gruppe bestehend aus H, OH, $R_1$, $OR_2$, Cl, Phenoxy und

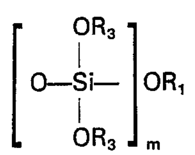

und

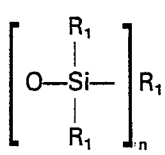

X, Y und Z gleich oder unterschiedlich sind und Reste bedeuten ausgewählt aus der Gruppe bestehend aus $R_4$, $OR_5$, Phenoxy und Phenyl, wobei einer der Reste zusätzlich Hydroxyl bedeutet; $R_{1-5}$ gleich oder verschieden sind und ausgewählt werden aus der Gruppe bestehend aus Alkylresten mit 1 bis 10 Kohlenstoffatomen und Cycloalkylresten mit 5 bis 10 Kohlenstoffatomen, m eine Zahl von 1 bis 10 und n eine Zahl von 1 bis 5, vorzugsweise 1 bis 2 bedeuten, in Gegenwart einer Matrixverbindung in einem wässrigen basischen Reaktionsmedium, dessen pH-Wert im Bereich von 9,5 bis 13,8 gehalten wird.

5. Verfahren nach Anspruch 4, bei welchem die Organosiliciumverbindung Tetramethylorthosilikat ist.

6. Verfahren nach Anspruch 5, bei welchem ein Dispersionsmittel im Reaktionsmedium anwesend ist.

7. Verfahren nach Anspruch 6, bei welchem die Matrixverbindung ausgewählt wird aus der Gruppe bestehend aus Tetramethylammoniumhydroxid, Tetrapropylammoniumhydroxid, Tetrabutylammoniumhydroxid und Hexamethylendiamin.

8. Verfahren nach Anspruch 4, bei welchem die Organosiliciumverbindung Ethylpolysilikat ist.

**Revendications**

1. Une variété polymorphique de silice cristalline composée de silicium et d'oxygène, cette variété polymorphique étant exempte de métaux, mis à part les métaux alcalins, et ayant une teneur en aluminium inférieure à environ 55 ppm, une acidité de surface nulle, une densité d'au moins environ 1,83, et un diagramme de diffraction des rayons X sensiblement tel qu'indiqué dans le Tableau II ou IV ou VI ou VIII

TABLEAU II

| d, nm (Å) | Intensité relative | d, nm (Å) | Intensité relative |
|---|---|---|---|
| 1,119 (11,19) | 99 | 0,426 (4,26) | 14 |
| 1,005 (10,05) | 57 | 0,408 (4,08) | 2 |
| 0,979 (9,79) | 17 | 0,401 (4,01) | 5 |
| 0,901 (9,01) | 1 | 0,385 (3,85) | 100 |
| 0,807 (8,07) | <1 | 0,383 (3,83) | 62 |
| 0,745 (7,45) | 1 | 0,374 (3,74) | 36 |
| 0,707 (7,07) | <1 | 0,372 (3,72) | 47 |
| 0,672 (6,72) | 8 | 0,365 (3,65) | 26 |
| 0,637 (6,37) | 17 | 0,360 (3,60) | 2 |
| 0,600 (6,00) | 23 | 0,348 (3,48) | 5 |
| 0,571 (5,71) | 13 | 0,344 (3,44) | 9 |
| 0,558 (5,58) | 16 | 0,339 (3,39) | 3 |
| 0,537 (5,37) | 4 | 0,335 (3,35) | 8 |
| 0,513 (5,13) | 3 | 0,331 (3,31) | 10 |
| 0,502 (5,02) | 8 | 0,325 (3,25) | 3 |
| 0,500 (5,00) | 8 | 0,318 (3,18) | 2 |
| 0,488 (4,88) | <1 | 0,314 (3,14) | 2 |
| 0,462 (4,62) | 6 | 0,305 (3,05) | 8 |
| 0,445 (4,45) | 1 | 0,299 (2,99) | 13 |
| 0,436 (4,36) | 8 | | |

TABLEAU IV

| d, nm (Å) | Intensité relative | d, nm (Å) | Intensité relative |
|---|---|---|---|
| 1,115 (11,15) | 5 | 0,295 (2,95) | 13 |
| 0,683 (6,83) | 31 | 0,291 (2,91) | 4 |
| 0,582 (5,82) | 91 | 0,271 (2,71) | 5 |
| 0,558 (5,58) | 59 | 0,259 (2,59) | 2 |
| 0,483 (4,83) | 36 | 0,251 (2,51) | 16 |
| 0,443 (4,43) | 28 | 0,242 (2,42) | 3 |
| 0,432 (4,32) | 3 | 0,236 (2,36) | 17 |
| 0,395 (3,95) | 36 | 0,228 (2,28) | 29 |
| 0,372 (3,72) | 98 | 0,223 (2,23) | 12 |
| 0,342 (3,42) | 43 | 0,216 (2,16) | 7 |
| 0,327 (3,27) | 100 | 0,212 (2,12) | 4 |
| 0,322 (3,22) | 15 | 0,206 (2,06) | 3 |
| 0,306 (3,06) | 18 | 0,202 (2,02) | 2 |
| | | 0,197 (1,97) | 5 |
| | | 0,194 (1,94) | 9 |
| | | 0,190 (1,90) | 6 |
| | | 0,186 (1,86) | 15 |

TABLEAU VI

| d, nm (Å) | Intensité relative | d, nm (Å) | Intensité relative |
|---|---|---|---|
| 1,186 (11,86) | 16 | 0,309 (3,09) | 6 |
| 1,030 (10,30) | 8 | 0,286 (2,86) | 19 |
| 0,719 (7,19) | 4 | 0,274 (2,74) | 8 |
| 0,614 (6,14) | 6 | 0,262 (2,62) | 6 |
| 0,587 (5,87) | 9 | 0,248 (2,48) | 10 |
| 0,529 (5,29) | 3 | 0,243 (2,43) | 12 |
| 0,494 (4,94) | 4 | 0,238 (2,38) | 14 |
| 0,420 (4,20) | 100 | 0,235 (2,35) | 12 |
| 0,389 (3,89) | 81 | 0,224 (2,24) | 6 |
| 0,361 (3,61) | 17 | 0,217 (2,17) | 7 |
| 0,347 (3,47) | 13 | 0,210 (2,10) | 12 |
| 0,337 (3,37) | 9 | 0,206 (2,06) | 12 |

TABLEAU VIII

| d, nm (Å) | Intensité relative | d, nm (Å) | Intensité relative |
|---|---|---|---|
| 1,098 (10,98) | 63 | 0,398 (3,98) | 4 |
| 0,988 (9,88) | 45 | 0,383 (3,83) | 100 |
| 0,740 (7,40) | <1 | 0,370 (3,70) | 51 |
| 0,665 (6,65) | 5 | 0,363 (3,63) | 14 |
| 0,635 (6,35) | 3 | 0,347 (3,47) | 7 |
| 0,594 (5,94) | 19 | 0,338 (3,38) | 6 |
| 0,553 (5,53) | 11 | 0,331 (3,31) | 11 |
| 0,511 (5,11) | 2 | 0,324 (3,24) | 4 |
| 0,497 (4,97) | 9 | 0,317 (3,17) | 3 |
| 0,459 (4,59) | 4 | 0,304 (3,04) | 11 |
| 0,444 (4,44) | 2 | 0,297 (2,97) | 19 |
| 0,433 (4,33) | 8 | 0,286 (2,86) | 3 |
| 0,423 (4,23) | 2 | 0,278 (2,78) | 3 |

2. Une variété polymorphique de silice de la revendication 1, ayant une structure du type pentasil.

3. Une base de catalyseur comprenant la silice spécifiée dans la revendication 1.

4. Un procédé pour préparer des variétés polymorphiques de silice cristallines selon les revendications 1 et 2, consistant à chauffer à une température comprise dans la plage de 100—300°C un composé organique du silicium qui est essentiellement exempt de métaux, mis à part les métaux alcalins, et répond à la formule

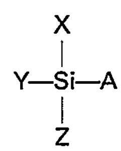

dans laquelle A est un groupe choisi dans la classe formée par H, OH, $R_1$, $OR_2$, Cl, le groupe phénoxy et

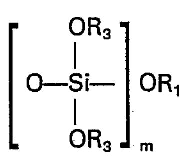

et

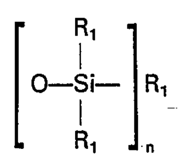

X, Y et Z sont identiques ou différents et sont des groupes choisis dans la classe formée par $R_4$, $OR_5$, le groupe phénoxy et le groupe phényle l'un de ces groupes pouvant en outre être un groupe hydroxyle; et $R_1$—$R_5$ sont identiques ou différentes et sont choisis dans la classe formée par les groupes alkyles ayant 1—10 atomes de carbone et les groupes cycloalkyles ayant 5—10 atomes de carbone, m est un nombre entier de 1—10 et n est un nombre entier de 1—5, de préférence 1—2, en présence d'un composé-modèle dans un milieu de réaction basique aqueux dont le pH est maintenu dans l'intervalle de 9,5—13,8.

5. Le procédé de la revendication 4, dans lequel le composé organique du silicium est l'orthosilicate de tétraméthyle.

6. Le procédé de la revendication 5, dans lequel un agent dispersant est présent dans le milieu de réaction.

7. Le procédé de la revendication 6, dans lequel le modèle est un composé choisi dans le groupe formé par l'hydroxyde de tétraméthylammonium, l'hydroxyde de tétrapropylammonium, l'hydroxyde de tétrabutylammonium et l'hexaméthylènediamine.

8. Le procédé de la revendication 4, dans lequel le composé organique du silicium est un polysilicate d'éthyle.